# FASCICULE DE BREVET EUROPEEN

(11) **EP 0 477 075 B1**
(45) Date de publication et mention de la délivrance du brevet: **21.12.1994**
(21) Numéro de dépôt: 91402441.9
(22) Date de dépôt: 13.09.1991
(51) Int. Cl.: B60N 2/48

(54) **Appui-tête notamment pour siège de véhicule**
Kopfstütze, insbesondere für Fahrzeugsitze
Headrest, particularly for vehicle seats

(30) Priorité: 19.09.1990 FR 9011573
(43) Date de publication de la demande: 25.03.1992
(73) Titulaire: CESA COMPAGNIE EUROPEENNE DE SIEGES POUR AUTOMOBILES, 92300 Levallois-Perret (FR)
(72) Inventeur: Louys François, F-25350 Mandeure (FR)
(74) Mandataire: Moncheny, Michel

(56) Documents cités:
- EP-A- 0 024 687
- EP-A- 0 341 683
- DE-A- 2 419 433
- DE-A- 2 726 141
- DE-A- 2 836 579
- US-A- 4 776 048

## Description

La présente invention concerne les sièges de véhicule, et tout spécialement de véhicule automobile terrestre, et en particulier les appuis-tête notamment annulaires.

Les appuis-tête pour dossier de siège notamment de véhicule automobile constitués, entre autres, d'une armature par exemple en U avec une partie interne et une partie externe, d'un coussin par exemple annulaire dans lequel la partie interne de l'armature est logée et d'un revêtement extérieur enveloppant le coussin sont connus. Certains des appuis-tête de ce type qui sont actuellement sur le marché sont en particulier constitués d'un coussin fait d'une mousse de polyuréthane et obtenu par injection. Les coussins de cette nature ne donnent pas entière satisfaction, notamment en ce qui concerne la sécurité des occupants.

Comme on le sait, les Pouvoirs Publics ont édicté des normes que les constructeurs de véhicules doivent respecter et les appuis-tête avec les coussins du type que l'on vient de rappeler ne donnent pas entière satisfaction; en effet ils ne contribuent pas d'une manière totalement efficace à l'absorption d'énergie qui peut être nécessaire en cas de choc relativement important. La mousse de polyuréthane est habituellement utilisée bien que non totalement satisfaisante sur le plan de la sécurité, mais son prix est relativement modique.

Une solution est par exemple illustrée par le document EP-A-0 307 214. Si l'appui-tête selon ce document, dont tous les éléments qui sont divulgués et qui sont nécessaires à l'invention sont mentionnés dans le préambule de la revendication principale, donne relativement satisfaction, il ne participe pas encore suffisamment à la sécurité car la configuration adoptée ne comprend pas de fente qui, dans des situations extrêmes, autorise un déboîtement du coussin.

Le but de l'invention est de remédier à ce type d'inconvénient en faisant en sorte que non seulement la sécurité des occupants soit améliorée mais aussi que leur confort soit accru.

L'invention a pour objet un appui-tête pour dossier de siège, notamment de véhicule automobile du type indiqué dans le préambule de la revendication principale et dont les particularités distinctives sont exposées dans la partie caractérisante notamment de cette revendication.

D'autres caractéristiques de l'invention ressortiront de la lecture de la description et des revendications qui suivent et de l'examen des figures du dessin, donné seulement à titre d'exemple, où :
- la Fig. 1 est une vue perspective d'un mode de réalisation d'un appui-tête selon l'invention;
- la Fig. 2 est une coupe partielle selon la ligne 2-2 de la Fig. 1 et
- la Fig. 3 est une vue perspective partielle éclatée du mode de réalisation de la Fig. 1.

Les appuis-tête pour sièges et en particulier pour sièges de véhicule automobile terrestre étant bien connus dans la technique, de même que leurs procédés de fabrication, on ne décrira dans la suite que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, un même numéro de référence identifie toujours un élément homologue quel que soit le mode de réalisation.

Pour la commodité de l'exposé, on décrira successivement les divers constituants d'un appui-tête selon l'invention.

Comme on peut l'observer en examinant les différentes figures du dessin, un appui-tête selon l'invention comprend entre autres une armature 10, un coussin 20 et un revêtement extérieur 30.

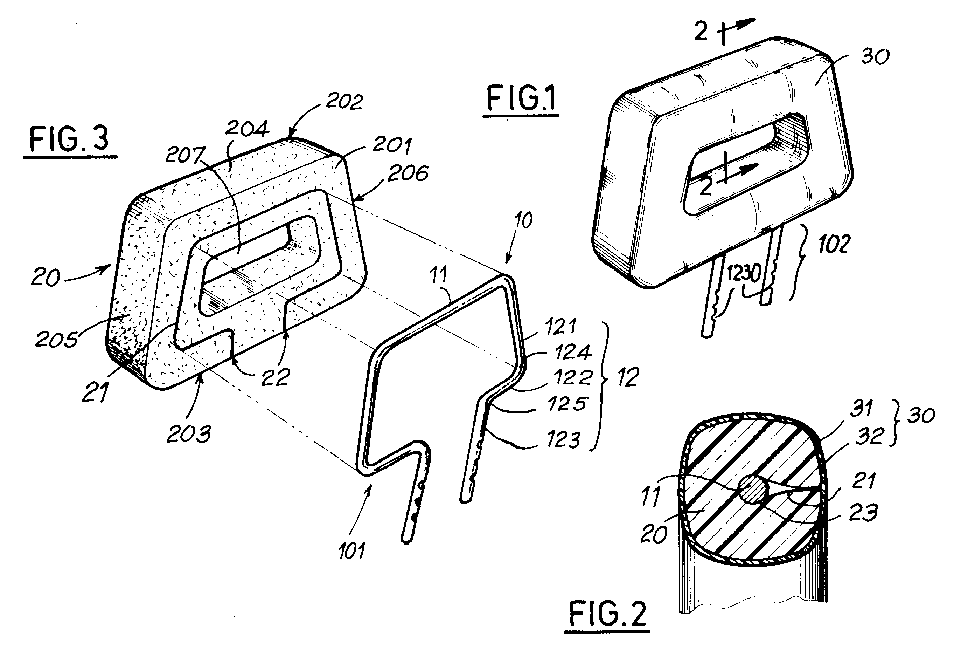

L'armature 10, de préférence en U, comprend un pont 11 qui relie deux branches 12 latérales. Chacune des branches 12 est faite d'un segment 121, d'une barre 122 en équerre et d'une jambe 123. Comme on peut le voir en particulier sur la Fig. 3, le segment 121 est relié au pont 11 de manière à être approximativement perpendiculaire à celui-ci à chacune de ses extrémités. La barre 122 en équerre est reliée, d'une part au segment 121 par un cintre 124 et, d'autre part, à la jambe 123 par un contre-coude 125. Comme on peut l'observer, le pont 11, les segments 121 et les barres 122 forment la partie interne 101 de l'armature. Les jambes 123 avec au besoin une partie du contre-coude 125 forment la partie externe 102 de l'armature. Comme on le voit, la partie interne 101 et la partie externe 102 sont dans des plans de préférence un peu inclinés relativement l'un à l'autre.

Le coussin 20 a une configuration par exemple annulaire approximativement parallélépipédique ou prismatique, comme illustré. Ce coussin est délimité par deux faces 201 et 202, deux bases 203 et 204 et deux côtés 205 et 206. Un ajour 207 central transperce les faces 201 et 202 de manière à obtenir la configuration annulaire si c'est cette dernière qui est adoptée. Pour le mode de réalisation illustré, la face 201 est pourvue d'une fente 21 dont la configuration est celle de la partie interne 101 de l'armature 10. Cette fente 21 débouche sur la base 203 par des orifices 22 pour le passage de la partie externe 102 de l'armature 10. Comme on peut l'observer, la profondeur de cette fente est telle que la partie interne 101 de l'armature, lorsqu'elle est en place, est logée pour l'essentiel approximativement à mi-épaisseur du coussin 20. S'il y a lieu, le fond de la fente 21 est pourvu d'un réceptacle 23 qui facilite la mise en place de la partie interne 101 de l'armature.

Le revêtement 30 présente une pellicule 31 superficielle et une sous-couche 32, comme on peut l'observer tout spécialement sur la section de la Fig. 2.

L'armature 10, pleine ou creuse, est de préférence métallique. De préférence les jambes 123 portent des crans 1230 ou similaires destinés à permettre le réglage de la position de l'appui-tête lorsqu'il est associé au dossier d'un siège.

Le coussin 20 est fait en une mousse à cellules fermées de densité comprise entre 20 g/l et 300 g/l environ. Cette mousse est obtenue par moulage. Pour obtenir cette mousse, on utilise de préférence des perles ou des granules éventuellement expansés de polyéthylène ou de polypropylène. Des matériaux qui conviennent particulièrement bien pour la fabrication d'un tel coussin sont par exemple vendus dans le commerce sous l'appellation "EPERAN" par la société KANEKA BELGIUM N.V. ou l'appellation "NEOPOLEN P" par la société BASF ou bien encore "ETHAFOAM" par la société DOW CHEMICAL et "ARPRO" par la société ARCO CHEMICAL. Ces matériaux sont mis en oeuvre par moulage, par exemple en moule métallique.

Le revêtement 30 est fait en une mousse de polyuréthane de densité comprise entre 100 g/l et 1000 g/l environ. Ce revêtement est obtenu par surmoulage de manière à ce que la pellicule superficielle 31 soit autoformée et que l'épaisseur du revêtement soit de l'ordre de 3 à 5 mm.

Les matériaux utilisés pour la fabrication du coussin qui ont des cellules ou pores fermés présentent de bonnes propriétés élastiques qui leur confèrent souplesse et bonne mémoire élastique après sollicitation dynamique. Cette élasticité contribue à un amortissement notable et à une récupération de forme après déformation tout en présentant une faible déformation résiduelle sous charge permanente. Outre ces propriétés, ces matériaux possèdent une très grande aptitude à une absorption énergétique qui, bien sûr, favorise la sécurité.

Selon une technique de fabrication, l'armature est mise en place dans le moule qui sert à la confection du coussin et ce dernier est moulé sur la partie interne de l'armature qui joue ainsi le rôle de prisonnier ou "insert".

Selon une autre technique de fabrication, le coussin est moulé séparément avec une fente comme indiqué précédemment; l'armature 10 est engagée à force dans la fente.

Afin de parfaire les conditions de sécurité, la fente 21 est faite sur la face 201 qui est celle qui sera destinée à recevoir indirectement l'appui de la tête d'un occupant. Une telle localisation de la fente permet encore d'absorber davantage d'énergie en cas de choc puisque, non seulement l'énergie du choc résultant de l'appui de la tête est absorbée par la mousse, mais aussi par la tendance au déboîtement de l'armature.

Que l'on utilise l'une ou l'autre des deux techniques indiquées, le revêtement est surmoulé de manière à donner directement à l'appui-tête son aspect extérieur final.

Le petit angle que forment la partie interne et la partie externe est fonction notamment du mode de fixation de l'armature sur un dossier et de l'inclinaison de celui-ci.

De la description qui précède, on comprend tous les avantages qu'apporte un appui-tête selon l'invention tant en ce qui concerne la sécurité que le confort.

## Revendications

1. Appui-tête pour dossier de siège notamment de véhicule automobile constitué, entre autres, d'une armature (10) en U avec une partie interne (101) et une partie externe (102), d'un coussin (20) qui est délimité par deux faces (201, 202), deux bases (203, 204) et deux côtés (205, 206) et dans lequel la partie interne (101) de l'armature (10) est logée, et d'un revêtement (30) extérieur enveloppant le coussin (20) où ce coussin (20) est fait en une mousse et est obtenu par moulage et où ce revêtement (30) qui est fait en une mousse présente une pellicule (31) superficielle appliquée sur une sous-couche (32), appui-tête caractérisé en ce que l'une (201) desdites faces (201, 202) est pourvue d'une fente (21) dans laquelle est logée la partie interne (101) de l'armature (10) et dont la configuration est celle de la partie interne (101) de l'armature (10), ladite fente (21) débouchant sur l'une (203) de ces bases (203, 204) par des orifices (22) pour le passage de la partie externe (102) de l'armature (10).

2. Appui-tête selon la revendication 1, caractérisé en ce que la partie interne (101) de l'armature (10) est logée pour l'essentiel approximativement à mi-épaisseur du coussin (20).

3. Appui-tête selon la revendication 1 ou 2, caractérisé en ce que la face (201) pourvue de la fente (21) est celle destinée à recevoir indirectement la tête d'un occupant.

4. Appui-tête selon l'une quelconque des revendications 1 à 3, caractérisé en ce que l'armature (10) est engagée à force dans la fente (21).

5. Appui-tête selon l'une quelconque des revendications 1 à 3, caractérisé en ce que le coussin (20) est moulé sur la partie interne (101) de l'armature (10).

6. Appui-tête selon l'une quelconque des revendications 1 à 5, caractérisé en ce que l'armature (10) en U comprend un pont (11) et deux branches (12) faites chacune d'un segment (121), d'une barre en équerre (122) et d'une jambe (123) où ce segment (121) est relié à ce pont (11), cette barre (122) est reliée d'une part à ce segment (121) par un cintre (124) et d'autre part à cette jambe (123) par un contre-coude (125) de manière que ces pont (11), segments (121) et barres (122) forment la partie interne (101) et ces jambes (123) la partie externe (102), ces parties interne (101) et externe (102) étant dans des plans un peu inclinés relativement l'un à l'autre.

7. Appui-tête selon l'une quelconque des revendications 1 à 6, caractérisé en ce que l'armature (10) est pleine.

8. Appui-tête selon l'une quelconque des revendications 1 à 6, caractérisé en ce que l'armature (10) est creuse.

9. Appui-tête selon la revendication 7 ou 8, caractérisé en ce que l'armature (10) est métallique.

10. Appui-tête selon l'une quelconque des revendications 1 à 9, caractérisé en ce que le coussin (20) est annulaire et transpercé d'un ajour (207) central.

11. Appui-tête selon l'une quelconque des revendications 1 à 10, caractérisé en ce que le coussin (20) est fait en une mousse à cellules fermées de densité comprise entre 20 kg/m³ et 300 kg/m³ environ et en ce que le revêtement (30) est fait en une mousse de densité comprise entre 100 kg/m³ et 1 000 kg/m³ formant une sous-couche (32) sur laquelle la pellicule superficielle (31) est autoformée.

12. Appui-tête selon l'une quelconque des revendications 1 à 11, caractérisé en ce que le coussin (20) est en mousse de polyéthylène.

13. Appui-tête selon l'une quelconque des revendications 1 à 11, caractérisé en ce que le coussin (20) est en mousse de polypropylène.

## Claims

1. A headrest for the back of a seat, in particular of a motor vehicle, constituted inter alia by a U-shaped frame (10), with an inner part (101) and an outer part (102), a cushion (20) which is delimited by two faces (201, 202), two bases (203, 204) and two sides (205, 206) and wherein the inner part (101) of the frame (10) is housed, and an outer cover (30) surrounding the cushion (20), where this cushion (20) is made of a foam and is obtained by moulding and where this cover (30) which is made of a foam has a surface skin (31) applied onto an underlayer (32), which headrest is characterized in that one (201) of the said faces (201, 202) is provided with a slot (21) wherein the inner part (101) of the frame (10) is housed and whose configuration is that of the inner part (101) of the frame (10), the said slot (21) opening onto one (203) of these bases (203, 204) via openings (22) for the passing of the outer part (102) of the frame (10).

2. A headrest according to claim 1, characterized in that the inner part (101) of the frame (10) is accommodated in essence approximately at mid-height of the cushion (20).

3. A headrest according to claim 1 or 2, characterized in that the face (201) provided with the slot (21) is that intended to receive indirectly an occupant's head.

4. A headrest according to any one of claims 1 to 3, characterized in that the frame (10) is force-fitted into the slot (21).

5. A headrest according to any one of claims 1 to 3, characterized in that the cushion (20) is moulded onto the inner part (101) of the frame (10).

6. A headrest according to any one of claims 1 to 5, characterized in that the U-shaped frame (10) includes a bridge (11) and two sides (12) each made up of a segment (121), a bar (122) at right angles and a leg (123), where this segment (121) is connected to this bridge (11), this bar (122) is connected on the one hand, to this segment (121) by a bend (124) and, on the other hand, to this leg (123) by a reverse bend (125), so that the said bridge (11), segments (121), and bars (122) form the inner part (101), and these legs (123), the outer part (102), the said inner part (101) and outer part (102) being in planes that are slightly inclined relative to each other.

7. A headrest according to any one of claims 1 to 6, characterized in that the frame (10) is solid.

8. A headrest according to any one of claims 1 to 6, characterized in that the frame (10) is hollow.

9. A headrest according to claim 7 or 8, characterized in that the frame (10) is metallic.

10. A headrest according to any one of claims 1 to 9, characterized in that the cushion (20) is annular and is transpierced by a central opening (207).

11. A headrest according to any one of claims 1 to 10, characterized in that the cushion (20) is made of a closed-cell foam with a density approximately comprised between 20 kg/m³ and 300 kg/m³, and in that the cover (30) is made of a foam with a density comprised between 100 kg/m³ and 1,000 kg/m³ forming an underlayer (32) whereon the surface skin (31) is self-formed.

12. A headrest according to any one of claims 1 to 11, characterized in that the cushion (20) is made of a polyethylene foam.

13. A headrest according to any one of claims 1 to 11, characterized in that the cushion (20) is made of a polypropylene foam.

## Patentansprüche

1. Kopfstütze für Rückenlehnen von Sitzen, insbesondere von Kraftfahrzeugen, die unter anderem gebildet wird durch eine U-förmige Verstärkung (10) mit einem inneren Teil (101) und einem äußeren Teil (102), ein Polster (20), das durch zwei Stirnflächen (201, 202), Grundflächen (203, 204) und zwei Seiten (205, 206) begrenzt wird, und das den inneren Teil (101) der Verstärkung (10) aufnimmt, und eine das Polster (20) umhüllenden äußeren Hülle (30), wobei das Polster (20) durch Formen aus einem Schaumstoff hergestellt ist und die aus einem Schaumstoff hergestellte Hülle (30) eine Oberflächen-Haut (31) auf einer Unterlage (32) aufweist, welche Kopfstütze dadurch gekennzeichnet ist, daß eine (201) der Stirnflächen (201, 202) mit einem Schlitz (21) versehen ist, in welchem der innere Teil (101) der Verstärkung (10) untergebracht ist und der entsprechend dem inneren Teil (101) der Verstärkung (10) verläuft, welcher Schlitz (21) in einer (203) der Grundflächen (203, 204) in Öffnungen (22) für den Durchtritt des äußeren Teils (102) der Verstärkung (10) mündet.

2. Kopfstütze nach Anspruch 1, dadurch gekennzeichnet, daß der innere Teil (101) der Verstärkung (10) im wesentlichen annähernd in der Mitte der Dicke des Polsters (20) angeordnet ist.

3. Kopfstütze nach Anspruch 1 oder 2, dadurch gekennzeichnet, daß die mit dem Schlitz (21) versehene Stirnfläche (201) diejenige ist, die dazu bestimmt ist, indirekt den Kopf eines Insassen aufzunehmen.

4. Kopfstütze nach einem der Ansprüche 1 bis 3, dadurch gekennzeichnet, daß die Verstärkung (10) mit Kraft in den Schlitz (21) eingedrückt ist.

5. Kopfstütze nach einem der Ansprüche 1 bis 3, dadurch gekennzeichnet, daß das Polster auf den inneren Teil (101) der Verstärkung (10) aufgeformt ist.

6. Kopfstütze nach einem der Ansprüche 1 bis 5, dadurch gekennzeichnet, daß die U-förmige Verstärkung (10) eine Brücke (11) und zwei Schenkel (12) aufweist, die jeweils aus einem Abschnitt (121), einer abgewinkelten Stange (122) und einem Bein (123) bestehen, wobei der Abschnitt (121) mit der Brücke (11) verbunden ist, die Stange (122) einerseits durch einen Bogen (124) mit dem Abschnitt (121) und andererseits durch ein entgegengesetztes Kniestück (125) mit dem Bein (123) verbunden ist, so daß die Brücke (11), die Abschnitte (121) und Stangen (122) den inneren Teil (101) und die Beine (123) den äußeren Teil (102) bilden, wobei der innere Teil (101) und der äußere Teil (102) in etwas gegeneinander geneigten Ebenen liegen.

7. Kopfstütze nach einem der Ansprüche 1 bis 6, dadurch gekennzeichnet, daß die Verstärkung (10) massiv ist.

8. Kopfstütze nach einem der Ansprüche 1 bis 6, dadurch gekennzeichnet, daß die Verstärkung (10) hohl ist.

9. Kopfstütze nach Anspruch 7 oder 8, dadurch gekennzeichnet, daß die Verstärkung (10) aus Metall besteht.

10. Kopfstütze nach einem der Ansprüche 1 bis 9, dadurch gekennzeichnet, daß das Polster (20) ringförmig und von einem zentralen Durchbruch (207) durchsetzt ist.

11. Kopfstütze nach einem der Ansprüche 1 bis 10, dadurch gekennzeichnet, daß das Polster (20) aus einem geschlossenzelligen Schaumstoff mit einer Dichte zwischen etwa 20 kg/m³ und 300 kg/m³ hergestellt ist und daß die Hülle (30) aus einem Schaumstoff mit einer Dichte zwischen etwa 100 kg/m³ und 1000 kg/m³ hergestellt ist, der eine Unterlage (32) bildet, auf der die Oberflächen-Haut (31) selbstformend ausgebildet ist.

12. Kopfstütze nach einem der Ansprüche 1 bis 11, dadurch gekennzeichnet, daß das Polster (20) aus Polyethylenschaum besteht.

13. Kopfstütze nach einem der Ansprüche 1 bis 11, dadurch gekennzeichnet, daß das Polster (20) aus Polypropylenschaum besteht.
